# EUROPEAN PATENT APPLICATION

(11) **EP 4 722 417 A1**
(43) Date of publication of application: **08.04.2026**
(21) Application number: 24204650.6
(22) Date of filing: 04.10.2024
(51) Int. Cl.: C25B 1/04, H02M 7/00

(54) **POWER SUPPLY ARRANGEMENT FOR AN ELECTROLYSER AND ELECTROLYSIS PLANT**

(71) Applicant: Siemens Energy Global GmbH & Co. KG, 81739 München (DE)
(72) Inventor: Craciun, Bogdan, 91052 Erlangen (DE); Teller, Michael, 91058 Erlangen (DE); Langenberg, Nils, 90461 Nürnberg (DE); Schumann, Sven, 91452 Wilhermsdorf (DE); Bendig, Marvin, 90513 Zirndorf (DE)

(57) **Abstract**

In invention relates to a power supply arrangement (1) for an electrolyser (3), comprising a transformer unit (5) with terminals to an AC electric grid (7) and a first DC power supply unit (9A) that is positioned on a foundation (11) and comprising a second DC power unit (9B), the transformer unit (5) being positioned on the foundation (11) next to the first DC power supply unit (9A), the second DC power supply unit (9B) being positioned on an elevated platform (13) and arranged above of the first DC power supply unit (9A).

The invention is further related to an electrolysis plant (25) that comprises an electrolyser (3) and a power supply arrangement (1).

## Description

The invention is related to a power supply arrangement for an electrolyser plant with a transformer unit and a DC power supply unit. The invention also relates to an electrolysis plant.

An electrolysis plant is an electrochemical device that uses electricity, mainly DC current, to convert substances or chemicals provided as an educt via electrolysis processes into products. Corresponding to the variety of different electrochemical electrolysis processes there is also a large variety of electrolysis systems, such as an electrolysis plant water electrolysis and production of Hydrogen.

Hydrogen is nowadays generated from water, for example, by means of a proton exchange membrane (PEM) electrolysis or an alkaline electrolysis. The electrolysis systems use electrical energy to produce hydrogen and oxygen from the water supplied as educt. This electrochemical conversion process takes place in an electrolysis stack composed of several electrolysis cells. Several electrolysis cells are connected in series to form an electrolysis module, or module for short. Several modules in turn are connected in series to form an electrolysis stack. Water is introduced as a reactant into the electrolysis stack, which is under direct current (DC voltage), and after the water has flowed through the electrolysis cells, two fluid streams emerge as electrolysis products, consisting of water (H₂O) and gas bubbles (O₂ and H₂) in a two-phase mixture.

Current considerations are to generate valuable materials with excess energy from renewable energy sources in times of plenty of sun and wind, i.e. with above-average solar power or wind power generation. A resource can be hydrogen notably, which is generated by water electrolysis systems. For example, so-called renewable energy gas - also known as "RE gas" - can be produced bases of hydrogen. A renewable gas is a combustible gas that is obtained from renewable sources using electrical energy.

Hydrogen is a particularly environmentally friendly and sustainable energy source. It has the unique potential of realizing energy systems, transportation systems and large parts of chemical industry without CO₂ emissions. For this to succeed, however, the hydrogen must not come from fossil sources, but must be produced with the help of renewable energies. At least a growing proportion of the electricity generated from renewable sources is now being fed into the public grid. Thus, according to the electricity mix, at least a corresponding and increasing proportion of green hydrogen can be generated if an electrolysis system is operated with electricity from the public grid or an island grid containing renewable power generation units.

In the case of electrolysis carried out on an industrial scale, the direct current is mainly provided via line-commutated rectifiers, but also self-commutated rectifiers can be used.

EP 3 556 905 A1 discloses such a circuit arrangement with an AC to DC electrical supply topology for an electrolyser. for the direct current supply of a plurality of electrolysers arranged in parallel. The circuit arrangement includes a rectifier, which converts an AC voltage on the input side into a first DC voltage on the output side. Each electrolyser is connected in parallel to the output of the rectifier via a converter, in particular a step-down converter, that converts the first direct voltage into a second direct voltage, such that the second direct voltage drops across the electrolyser. Each of the rectifiers, in particular the step-down converter, can be controlled or regulated thereby to adapt the level of its second direct voltage, its output voltage. By using the step-down converters designed to be controllable and/or adjustable for each of the electrolysers, the current flow through each electrolyser can also be adjusted as required when the electrolysers are connected in parallel.

For growing efforts and demand for large industrial scale projects of electrolysis plants, it appears more and more important and challenging to consider and optimize footprint of the plant, like for the DC power supply system. Technical questions of mounting, cabling, accommodation and placement of the components for a smooth interaction require a comprehensive and concise facility design.

In WO 2021249729 A1, for example, the technical problem is addressed about how to improve the heat dissipation and cooling of a platform and energy conversion system with a high density of containers, while also allowing for easy access to the containers for installation and maintenance purposes. The proposed solution is a platform for stacking a plurality of containers in an energy conversion system. By using a platform, the containers can be and precisely aligned and stacked closely on top of each other, allowing for a higher density of components in the system per area. The platform has alignment elements that allow for easy placement on standardized containers space saving design.

It is an object of the present invention to provide a power supply arrangement for an electrolyser.

This object is solved by a power supply arrangement for an electrolyser, comprising a transformer unit with terminals to an AC electric grid and a first DC power supply unit that is positioned on a foundation and comprising a second DC power unit, the transformer unit being positioned on the foundation next to the first DC power supply unit, the second power supply unit being positioned on an elevated platform and arranged above of the first DC power supply unit.

The grid may be the public electricity grid or an island or isolated electricity network. Hence, according to the invention, the power supply arrangement may be connected to the public grid or an island network in a similar manner. The electrolyser may comprise a plurality of electrolysis cells that are arranged in series connection.

The invention is based already on the consideration that for high-performance large scale electrolysis plants to be connected as consumer particularly to the public grid in future integrated energy systems, hardly any reliable approaches are known to design a power supply arrangement. This is even more crucial to determine and design upfront of a project a power supply arrangement that fulfils requirements of space-saving, mechanical load-bearing for the heavy components but that also flexibly allows access to the components for service and maintenance needs. The power supply arrangement for the electrolyser is a central part of the entire electrolysis plant giving the electrical characteristics as well as the spatial distribution of the entire plant. The power supply arrangement requires a certain amount of footprint in order for the subcomponents to be properly placed so they can operate as designed. For this power supply designers need to consider some limitations coming from the electrolysis plant side and design their supplies to fit into the spatial requirements. Therefore, for example, the mere fully symmetrical multilevel stacking approaches that can be found in the prior art are mainly focussed on space-optimization as such, could not reasonably satisfy those requirements. The power supply arrangement of the invention includes a more differentiated view on the individual components in the transformer unit and the DC power supply unit.

The intention of the designs is to maximize the power over the footprint which in the end leads to a generic topic of optimization & maximization of the power supply power density. Power density optimization is emphasised even more into the application of water electrolysis since the technology is a low voltage technology accounting up to double digit kA operating ranges.

It is a fundamental aspect to analyse the technology used in the power supply in terms of active switching elements as well as subcomponent evaluation. In a matter of a power supply subcomponent a rough division would be in between power conditioning AC components such as the transformer and the AC/DC conversion element which is the rectifier or other type of converter

The second aspect which influences the transformer design is the switching element and, at the moment, the most dominant switching element on the market suitable for electrolysis are the Thyristor and the IGBT based solution. The thyristor is the most suitable candidate in terms of power supply for electrolysis giving the high current capability and in return the power supply would have a reduced footprint. This means that the thyristor-based power supply would have the highest power density. Giving the nature of the thyristor based power supplies and the limitations present with the grid integration of this technology the designers are offering the IGBT-based power supply option. Compared with the thyristors, the IGBTs have a lower current capability which implies that more switching elements are needed to deliver the same power to the electrolysis load. This means that from a principle point of view IGBT power supplies have a lower power density.

Another aspect which is related to the IGBT based power supply operation is that sometimes the converters might need galvanic separation or that the AC currents are considerably high which implies certain limitations in the design of the power transformer. This means that the power capacity of the transformer needs to be divided into several units to accommodate the amount of IGBT converters.

Lower power density means increased footprint and the need for additional mechanical solutions needs to be considered. As a consequence, the present invention for the first time targets the analysis of areal distribution and footprint optimization, preferably of IGBT based power supplies accommodated in the power sully unit.

Hence, in the design of the power supply arrangement of the invention a comprehensive differentiation between the heavy and large scale transformer units that typically comprise massive three-phase power transformers that are connected to the grid and the AC/DC converters with switching elements that are accommodated or housed in the in the first and the second power supply unit respectively. The massive transformer unit is positioned on a foundation nearby the first DC power supply unit, which is positioned on the foundation as well. With the power supply arrangement both a cost - and performance optimized DC power supply for an electrolyser is provided. The platform accommodates and carries the second DC power flexibly allows a defined level for this component and positioning in regard of the transformer unit and the first DC power supply unit. The platform itself can be flexibly designed and positioned and is attached to the foundation.

In a particularly preferred embodiment of the power supply arrangement the second DC power supply unit is arranged on the platform in a lateral displacement in relation to the first DC power supply unit.

The present technical solution particularly also targets the stacking of the first and the second DC power supply units in order to optimize the footprint requirements of a preferably IGBT based power supply advantageously applicable for an electrolyser application. The concept allows to flexibly use the power supply in an indoor environment like a housing in a container or in an operational building as well as in an outdoor environment. In both cases the stacking option aims the same objective.

The intention of the stacking is to specifically use and incorporate an asymmetrical approach - instead of a mere symmetrical stacking - where the first and the second power supply unit are displaced on an asymmetry from one to another taking into consideration the levels that are provided from the platform. The first power supply unit is at a lower level placed on the foundation, whereas the second power supply unit is placed on an upper level carried by the platform.

The stacking option takes into consideration the use of a platform which enables the asymmetry between the levels and the respective positioning. The platform can be a full platform with vertical carriers affixed to the foundation, or it can be a partial platform with al least one vertical carrier to the foundation and with another support that may be provided by a constructive support element of the first DC power supply unit. The purpose of the asymmetry is to flexibly enable the AC and the DC connection. AC active components such as the AC transformer unit as well as the DC connection from the DC power sully unit towards the electrolyser, when being positioned, electrically connected and operated close to the power supply arrangement. The asymmetry displacement advantageously enables and favours the approach to stack only the DC power sully unit with its AC/DC-converters and still keep the very heavy & bulk components such as the transformers unit on the ground level. The asymmetrical stacking displacement of the first and the second power supply units does not affect the displacement of power transformers and gives the choice of positioning as per power supply designers demand. It is also possible that multiple number of first and second power supply units are provided, that are arranged by further applying and extending this displacement concept. The use of the stacking and asymmetry concept utilizes a ladder to enable access to the upper level components during installation and maintenance procedures.

In a further preferred embodiment of the power supply arrangement an AC supply line is led out of the secondary side of the transformer unit and is connected to an AC input of the first DC power supply unit.

In a further preferred embodiment of the power supply arrangement an AC supply line is led out of the secondary side of the transformer unit and is connected to an AC input of the second DC power supply unit.

The respective AC feed-in connections of the first and the second DC power supply unit towards the transformer unit is not limited to any configuration since it is based on the actual connection options offered by the suppliers. Hence the AC cabling and connection can be individually arranged and adapted accordingly.

In another preferred embodiment of the power supply arrangement the AC supply line is led out of the secondary side of the transformer unit and passed through the platform by means of an electrical feedthrough.

The platform construction is designed to allow for electrical feedthrough of the AC supply line to the second DC power unit and if needed also to the first DC power unit. This can be realized by AC plug-in connectors or alternatively by a flexible cable penetration through the platform by the help of a rubber or metal gaiter that are attached to the platform.

In another preferred embodiment of the power supply arrangement the DC power supply units comprise DC terminal designed for supplying an electrolyser with DC current when being connected.

The DC connection towards the electrolysis DC components is not limited to any configuration since it is based on the actual connection option available in the electrolysis DC circuit.

In a particularly preferred embodiment of the power supply arrangement a second transformer unit is provided that is positioned on the foundation next to the platform and that is arranged opposite to the transformer unit relative to the platform.

With a second transformer unit the overall AC power that can be provided to the DC power supply units can be enlarged. Further, one may use and adapt both the sizes of the transformer and the second transformer to obtain power supply at reasonable footprint. In this setup the second transformer unit can be used to supply the second DC power supply unit with AC power.

Therefore, in a preferred embodiment of the power supply arrangement an AC supply line is provided that is led out of the secondary side of the second transformer unit and is connected to an AC input of the second DC power supply unit.

The first and the second DC power supply units are AC/DC converters that my implement a thyristor based technology and/or an IGBT based technology to furnish DC current to an electrolyser to operate an electrolysis process.

In a preferred embodiment of the power supply arrangement the AC supply line is led out of the secondary side of the transformer unit and passed through the platform by means of an electrical feedthrough.

The electrical feedthrough of the AC cabling penetrates the platform through a side wall or an elevation of the platform, and/or though its carrier plate.

In a further preferred embodiment of the power supply arrangement a maintenance area is provided that is arranged on an elevated level such that the second power supply unit can be accessed.

The maintenance area can be easily provided as an integral part of the platform as such or as a separate construction element that can be attached as required. The embodiment can be designed as a walkable and resilient footprint construction in the outdoor area of the platform. Thus, it is possible for a person to gain lateral access to the interior of the second DC power supply unit that might be accommodated for example in a container. A maintenance flap also gives a person access to the interior of the container and can, for example, carry out installation and maintenance work at a height and elevated level above the foundation.

In a particularly preferred embodiment of the power supply arrangement at least one of the power supply units is equipped with an IGBT-converter that is designed for supplying an electrolyser with DC current when being operated.

Hence the first DC power supply unit and/or the second DC power supply unit comprise an IGBT-converter that includes a plurality of Integrated Gate Bipolar Transistors (IGBT) as switching elements. It is also possible that a hybrid system that also includes thyristor-based converter is provided. Advantageously the active elements of the first and the second DC power supply units can be housed in a respective container construction, particularly for outdoor installations of the power supply arrangement. The asymmetry stacking displacement of the power supply does not affect the displacement of power transformers and gives the choice of positioning as per power supply designers demand. The use of the stacking and asymmetry concept utilizes a ladder to enable access to the upper level with the maintenance area during installation and maintenance procedures.

Another aspect of the invention is related to an electrolysis plant that comprises an electrolyser and a power supply arrangement.

The electrolyser can be arranged in proximity to the power supply arrangement and connected to the DC connectors of the power supply units. By virtue of the power supply arrangement large scale electrolysis plant can be equipped and supplied with DC electrolysis current. Therefore, a plurality of electrolysers that are arranged and electrically connected in parallel electrolysis rows are possible. Each of the electrolysis rows may then comprise a plurality of electrolysis modules that are connected in series.

In another preferred embodiment of the electrolysis plant in the DC power supply unit a rectifier is provided that is designed for enabling a bidirectional operational mode, particularly a multilevel-modular-converter (MMC) is provided, and the rectifier being connected to the AC grid, such that voltage support can be achieved by providing reactive power to the grid.

The voltage source converter (VSC), particularly designed as a modular multilevel converter (MMC), is preferably designed for bidirectional operation and is connected to a central network connection point, so that voltage support through reactive power provision for the public power grid can be realized.

Advantageously, further network services for the grid, e.g. the public grid, are also possible, such as the assumption of network functions.

The voltage source converter (VSC) is also preferably designed as an IGBT-based converter architecture which is capable to fed electrical power from the supply line into the grid as required. Possible architectures include modular multilevel converter, active front ends, and so on. This is a special and advantageous form of bidirectional operation of the electrolyser plant.

This allows to implement in addition the advantageous possible option to store access power provided from the grid in a respective DC-based storage unit that can be connected on the DC-side of the electrolysis plant. Hence a storage unit may comprise a battery or a capacity bank that is integrated in the electrolysis plant. The DC storage unit maybe connected via an additional DC-DC converter on the DC-side of the converter that is available. An MMC or other topology therefore optionally can transfer power that is stored in the storage unit from the DC side to the AC side or vice versa, which promotes particularly flexible operation of the electrolysis plant. In operation the electrolysis plant is connected to the power grid via the transformer unit, so that when the electrolysis plant is in operation, the electrolyser is supplied with direct current via the DC power supply unit to run the electrolysis process.

The presented solution for a power supply arrangement and an electrolysis plant investigates the footprint reduction by an asymmetric displacement. The platform, preferably designed as a partial platform, examines the cost reduction of materials used compared with the full and extended platform construction. The asymmetric displacement of the first and the second DC power supply units enables the installation of heavy and large scale transformer unit on the foundation on any side of the overall stacked DC power supply units based on the designer's needs. The asymmetry stacking enables a hybrid connection to the stacked converters from the bottom for the upper power converters and from top for the lower power converters. The asymmetry and stacking offers cost reduction in multi-winding transformer configuration and simplifies the busbar design. Usually, multi winding transformer units, like largest three-phase transformers secondary sides end in different locations form a mechanical standpoint and stacking and asymmetry simplifies the AC busbar design to a straightforward connection. This is very beneficial also for short circuit current situations since complicated busbar routing might present difficulties.

The properties, features and advantages of the invention described above, as well as the manner in which they are achieved, will be explained in more detail in connection with the figures in the following description of the example and variations thereof. The example and the corresponding variations serve to explain the invention and do not limit the invention to the combinations of features indicated therein, even with respect to functional features. Moreover, any of the features disclosed in the example below may be considered in isolation and suitably combined with the features of any of the above embodiments and their further aspects.

It is shown in:
- FIG 1: in a schematic representation an embodiment of an electrolysis power supply arrangement;
- FIG 2: another example of an electrolysis power supply arrangement with two transformer units;
- FIG 3: another example of an electrolysis power supply arrangement with a modified platform compared to FIG 2;
- FIG 4: another example of an electrolysis power supply arrangement with a partial platform;
- FIG 5: in a schematic representation an electrolysis plant with two electrolysis rows;

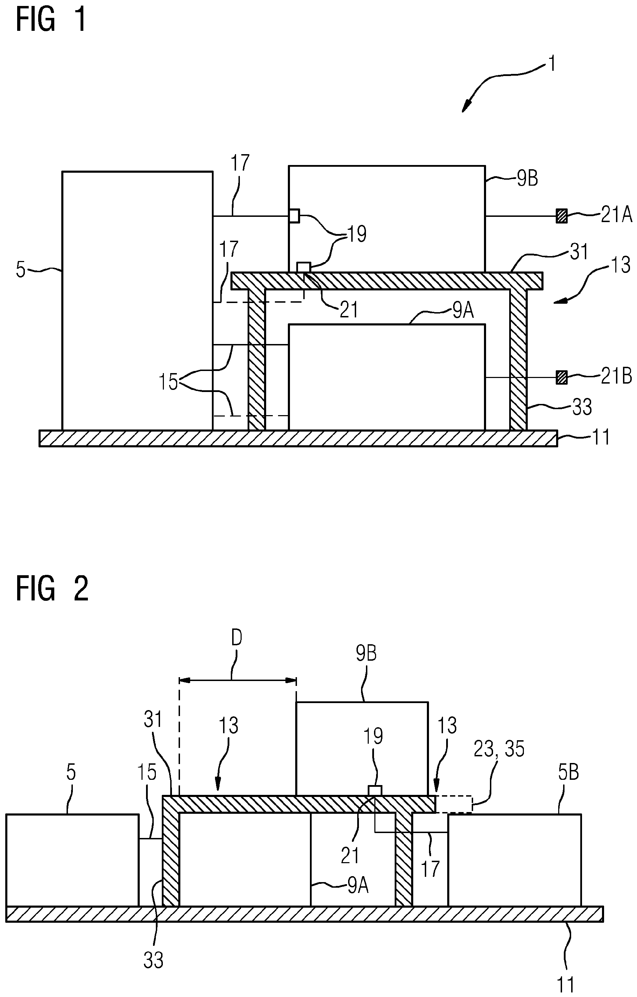

FIG 1 illustrates a schematic representation of an embodiment of a power supply arrangement 1 from a long side view. A large transformer unit 5 and a first DC power supply unit 9A are positioned on a foundation 11. The transformer unit 5 comprises a three-phase mains transformer that is connected by virtue of an AC supply line 15 to an AC input of the first DC power supply unit 9A. A massive platform 13 is provided that comprises a supporting plate 31 and an elevation 33. The elevation 33 is positioned and anchored on the foundation as well. The first DC power supply unit 9A is positioned below the supporting plate 31 and at least partly encased from the platform 13. On top of the platform 13 a second DC power supply unit 9B is placed on the supporting plate 31. The second DC power supply unit 9B is connected to the transformer unit 5 as well. To obtain this, an AC supply line 17 is led out of secondary side of the transformer unit 5 and connected to an AC input 19 of the second DC power supply unit 9B. This can be achieved in one alternative by virtue of an electrical feedthrough 21 or plug connection that passes through the platform 13. The feedthrough 21 pushes through the supporting plate 31 and - in case required from the construction of the platform 13 - also through the elevation 33 of the platform. The first DC power supply unit 9A and the second DC power supply unit 9B both contain an IGBT based converter system. The first DC power supply unit 9A and the second DC power supply unit 9B both can be containerized and placed in a respective container. This embodiment is of particular importance in case that the power supply arrangement 1 is operated outdoors and exposed to wind and weather. Alternatively, it is possible that the components of power supply arrangement 1 are placed in a closed operational building as casing. In normal operation both the first and the second DC power supply units 9A, 9B rectify an AC current received from the transformer unit 5 and provide as an DC current that is available at respective DC terminals 21A, 21B to drive an electrolysis process. The first DC power supply unit 9A that is placed on the ground level defined by the foundation 11 and the second DC power supply unit 9b that is placed on an upper level on the supporting plate 31 are laterally displaced with regard to each other. This is shown in detail in the embodiments of FIG 2 - FIG 4, that all show a short side views of a power supply arrangement 1, which are discusses below.

FIG 2 shows another example of an electrolysis power supply arrangement with a transformer unit 5 and a second transformer unit 5B in a long side view. The second transformer unit 5B is positioned on the foundation 11 next to the platform 13 and arranged opposite to the transformer unit 5. The transformer unit 5 is connected to the first DC power supply unit 9A and the second transformer unit 5B is connected to the second DC power supply unit 9B. The latter being connected by virtue of an AC supply line 17 and feedthrough 21 that is integrated into the platform 13 or flanged accordingly. An AC input 19 is provided and placed at the housing of the second DC power unit 9B to supply AC current to the second DC power unit 9B. It is important to note that the second DC power supply unit 9B and the first DC power supply unit are arranged in a lateral displacement D from each other. Hence, both DC power supply units 9A, 9B are not stacked flush on top of each other and not flush aligned. Rather, it is intended to adjust a lateral displacement D that can be adapted to the needs of the utility and local space. Typically, a significant lateral displacement D of about 50% - 90 %, preferrable 60% - 80%, of the transverse dimension of the DC power supply units 9A, 9B is applied. The construction with the platform 13 allows in addition to provide a maintenance area 23 on an elevated level of the platform 13 such that the second DC power sully unit 9B can be easily accessed for maintenance and repair works. This maintenance area 23 can be achieved by an extension 25 that is designed as an integral part of the supporting plate 31 or as an service device realized in the form of an extension 35 that is an attachable or detachable to the supporting plate 21 as required.

The purpose of the asymmetry or lateral displacement D is to flexibly enable the AC connection towards the AC components such as the AC transformer units 5, 5B as well as the DC connection towards easily accessible DC terminals 21A, 21B of the DC power supply units 9SA, 9B such that an DC current is provided to run an electrolysis process. The asymmetric arrangement with a defined lateral displacement D enables the option to stack only the DC power supply units 9A, 9B, e.g. power electronic IGBT converters, and still keep the very heavy and bulk components such as the AC transformers of the transformer unit 5, 5B on the foundation 11 and ground level.

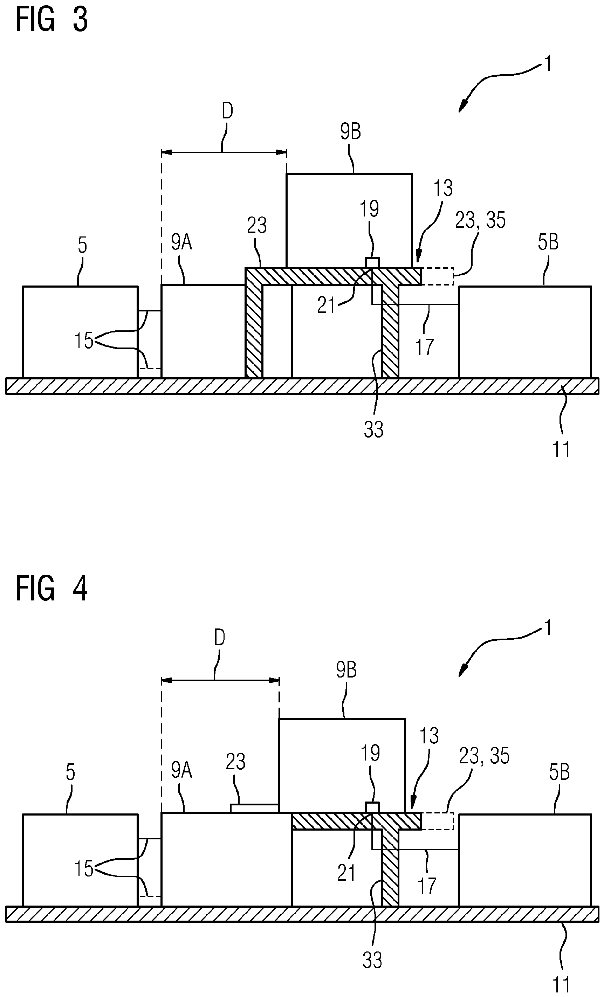

In FIG 3 another example of an electrolysis power supply arrangement 1 is shown in a short side view with a modified platform 13 compared to FIG 2. Here platform 13 is erected with a rather compact design, which allows an overall compact and space-saving design of the power supply arrangement 1. The supporting plate 31 has a smaller dimension compared to the example of FIG 2. In the arrangement of FIG 2 the first DC power supply unit 9A is only partly covered above from the supporting plate 31. The first DC power supply unit 9A juts the platform 13 and the openly constructed elevation 33. As in FIG 3 also the option of an extension 35 is provided as an additional maintenance area 23 on top of the platform.

FIG 4 represents another example of an electrolysis power supply arrangement 1 with a platform 13 that is only provided with an elevation 33 on one lateral end of the supporting plate 31. On the opposite side, the supporting plate 31 is otherwise supported by leaning on and attached to the first DC power supply unit 5B. It is alternatively possible to place the supporting plate 31 on top of the housing of the first DC power supply unit. Furthermore, a maintenance area 23 is equipped with a covering on top of the housing or containment of the first DC power supply unit 23 to enable a save access to the second DC power supply unit 9B and walka-bility in the maintenance area.

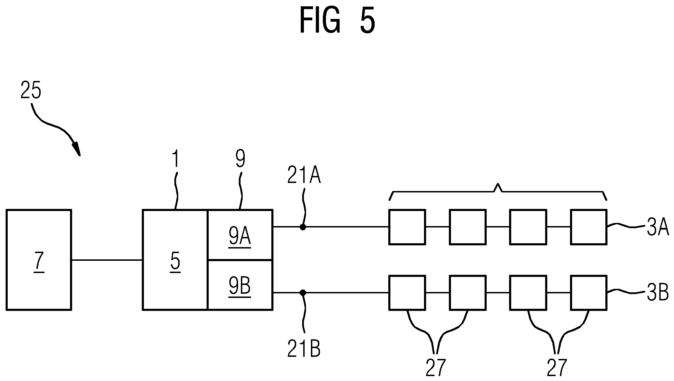

In FIG 5 a schematic representation of an electrolysis plant 25 is shown. The electrolysis plant 25 comprises a power supply arrangement 1 as described in some detail above with a transformer unit 5 and DC power supply units 9A, 9B. Furthermore, a large scale electrolyser 3 is connected to the DC power supply units 9A, 9B by virtue of respective terminals 21A, 21b. The electrolyser 3 comprises two electrolysis rows 29A, 29B which each have a plurality of electrolysis modules 27 that are electrically connected in series. The electrolysis rows 29A, 29B are electrically connected in parallel, whereas during operation the electrolysis row 29A is supplied with DC current from the first DC power supply unit 9A and the electrolysis row 29B is supplied with DC current from the second DC power supply unit 9B. To run the electrolysis process and to be able to operate the electrolyser 3 the electrolysis plant 25 needs to be connected to an AC electric grid 7 by virtue of the transformer unit 5 with respective terminals to an AC electric grid 7.

## Claims

1. Power supply arrangement (1) for an electrolyser (3), comprising a transformer unit (5) with terminals to an AC electric grid (7) and a first DC power supply unit (9A) that is positioned on a foundation (11) and comprising a second DC power unit (9B), the transformer unit (5) being positioned on the foundation (11) next to the first DC power supply unit (9A), the second DC power supply unit (9B) being positioned on an elevated platform (13) and arranged above of the first DC power supply unit (9A).

2. Power supply arrangement (1) according to claim 1, whereby the second DC power supply unit (9B) is arranged on the platform (13) in a lateral displacement in relation to the first DC power supply unit (9A).

3. Power supply arrangement (1) according to claim 1 or 2, whereby an AC supply line (15) is led out of the secondary side of the transformer unit (5) and is connected to an AC input of the first DC power supply unit (9A).

4. Power supply arrangement (1) according to claim 1, 2 or 3, whereby an AC supply line (17) is led out of the secondary side of the transformer unit (9B) and is connected to an AC input (19) of the second DC power supply unit (9B).

5. Power supply arrangement (1) according to claim 4, whereby the AC supply line (17) is led out of the secondary side of the transformer unit (5) and passed through the platform (13) by means of an electrical feedthrough (21).

6. Power supply arrangement (1) according to one of the one of the preceding claims, whereby the DC power supply units (9A, 9B) comprise DC terminals (21A, 21B) designed for supplying an electrolyser (3) with DC current when being connected.

7. Power supply arrangement (1) according to one of the preceding claims, whereby a second transformer unit (5B) is provided that is positioned on the foundation (11) next to the platform (13) and that is arranged opposite to the transformer unit (5) relative to the platform (13).

8. Power supply arrangement (1) according to claim 7, whereby an AC supply line (15) is led out of the secondary side of the second transformer unit (5B) and is connected to an AC input (19) of the second DC power supply unit (9B).

9. Power supply arrangement (1) according to claim 8, whereby the AC supply line (17) is led out of the secondary side of the transformer unit (5B) and passed through the platform (13) by means of an electrical feedthrough (21).

10. Power supply arrangement (1) according to one of the preceding claims, whereby a maintenance area (23) is provided that is arranged on an elevated level such that the second power supply unit (9B) can be accessed.

11. Power supply arrangement (1) according to one of the preceding claims, whereby at least one of the power supply units (9A, 9B) is equipped with an IGBT-converter designed for supplying an electrolyser (3) with DC current when being operated.

12. Electrolysis plant (25) comprising an electrolyser (3) and a power supply arrangement (1) according to one of the preceding claims.
